# EUROPÄISCHE PATENTSCHRIFT

(11) **EP 0 691 900 B1**
(45) Veröffentlichungstag und Bekanntmachung des Hinweises auf die Patenterteilung: **25.06.1997**
(21) Anmeldenummer: 94914352.3
(22) Anmeldetag: 05.04.1994
(51) Int. Cl.: B23P 19/06, B23Q 1/00, B21D 37/14

(54) **EINPRESSEINRICHTUNG ZUM EINPRESSEN VON FÜGETEILEN**
ARRANGEMENT FOR PRESSING-IN JOINING PARTS
SYSTEME POUR ENCASTRER DES PIECES D'ASSEMBLAGE

(30) Priorität: 02.04.1993 DE 4310953
(43) Veröffentlichungstag der Anmeldung: 17.01.1996
(73) Patentinhaber: PROFIL-Verbindungstechnik GmbH & Co. KG, 61381 Friedrichsdorf (DE)
(72) Erfinder: LUCKHARDT, Wolfgang, D-61462 Königstein (DE)
(74) Vertreter: Morgan, James G.
(86) Internationale Anmeldenummer: EP9401066
(87) Internationale Veröffentlichungsnummer: WO9422636

(56) Entgegenhaltungen:
- EP-A- 0 076 556
- EP-A- 0 197 909
- DE-U- 9 205 608
- FR-A- 2 170 532
- GB-A- 2 123 731
- US-A- 4 691 429

## Beschreibung

Die Erfindung betrifft eine Einpreßeinrichtung zum Einpressen von Fügeteilen wie z.B. Muttern in plattenförmige Bauteile, mit einem oberen und unteren Gehäuseteil, die relativ zueinander begrenzt verschiebbar und durch Federkraft in Richtung voneinander weg vorgespannt sind, wobei das untere Gehäuseteil einen Fügeteil-Kanal aufweist, dem jeweils ein Fügeteil durch eine seitliche Zuführöffnung zuführbar ist, und einem Stempel, der am oberen Gehäuseteil festgelegt ist und sich in den Fügeteil-Kanal erstreckt, um bei einer Relativverschiebung zwischen dem oberen und unteren Gehäuseteil das im Kanal befindliche Fügeteil von einer Ausgangsstelle benachbart zur Zuführöffnung zu einer Arbeitsstelle benachbart zum offenen Ende des Kanals zu verschieben und in das plattenförmige Bauteil einzupressen.

Derartige Einpreßeinrichtungen sind bekannt. Sie dienen beispielsweise dazu, selbststanzende Muttern in Blechteile einzupressen. Die hierzu erforderliche Relativverschiebung zwischen dem oberen und unteren Gehäuseteil wird üblicherweise dadurch erzeugt, daß ein oberes Pressenteil, an dem die Einpreßeinrichtung befestigt ist, nach unten bewegt wird, worauf sich das untere Gehäuseteil an das plattenförmige Bauteil anlegt und bei der weiteren Abwärtsbewegung des oberen Gehäuseteils der Stempel das Fügeteil in das plattenförmige Bauteil einpreßt. Üblicherweise ist dem Stempel eine nockengesteuerte Haltevorrichtung zugeordnet, die das Fügeteil während seiner Abwärtsbewegung durch den Fügeteil-Kanal in seiner Position hält.

Eine derartige Einpreßeinrichtung ist beispielsweise in der DE-U-92 05 608.3 offenbart. Die Einpreßeinrichtung ist hierbei in das obere Pressenteil in der Weise integriert, daß sie durch Zentrierstifte und Schrauben oder Klemmittel am oberen Pressenteil befestigt ist und die die Gehäuseteile vorspannenden Federn am Pressenteil abgestützt sind.

Der vorliegenden Erfindung liegt die Aufgabe zugrunde, eine Einpreßeinrichtung der eingangs genannten Gattung so weiterzubilden, daß ihre Einsatzmöglichkeiten erweitert werden.

Diese Aufgabe wird erfindungsgemäß dadurch gelöst, daß die Einpreßeinrichtung als integrale Baueinheit ausgebildet ist, die durch eine Schnellschlußkupplung an einem Maschinenteil anbringbar ist, daß Kupplungsmittel der Schnellschlußkupplung sowohl am oberen wie auch am unteren Gehäuseteil vorgesehen sind, so daß wahlweise das obere oder untere Gehäuseteil am Maschinenteil anbringbar ist, und daß das untere Gehäuseteil durch die Schnellschlußkupplung an einer Zwischenplatte anbringbar ist, die an dem als Pressenoberteil ausgebildeten Maschinenteil federnd aufgehängt ist.

Die Anbringung von Preßformen an einer Presse durch Schnellschlußkupplungen ist aus der FR-A-2 170 532 bekannt.

Die vorliegende Erfindung eröffnet eine Vielzahl von Anwendungsmöglichkeiten einer derartigen Einpreßeinrichtung, was eine beträchtliche Bereicherung des Standes der Technik darstellt. So erlaubt die Erfindung, eine Einpreßeinrichtung in einfacher Weise gegen eine andere Einpreßeinrichtung auszuwechseln, um beispielsweise Fügeteile verschiedener Art oder unterschiedlicher Abmessungen zu verarbeiten. Eine weitere Möglichkeit besteht darin, die Einpreßeinrichtung als auswechselbares Werkzeug eines Werkzeugwechselsystems einer Werkzeugmaschine auszubilden. Auch ist es möglich, die Einpreßeinrichtung - direkt oder indirekt - an einem Roboterarm anzubringen. Die erfindungsgemäß ausgebildete Einpreßeinrichtung stellt also eine mobile Einheit dar, die zu beliebigen Arbeitsstellen transportiert werden kann, was sie zum Einsatz bei NC-Maschinen, Transferstraßen usw. geeignet macht.

Zum Zuführen der Fügeteile ist üblicherweise ein an der Einpreßeinrichtung angeschlossener Schlauch vorgesehen, der zu einem Sortierer oder einer anderen Quelle für die Fügeteile führt. In besonders vorteilhafter Ausgestaltung der Erfindung ist jedoch der Einpreßeinrichtung ein Magazin zur Aufnahme einer begrenzten Anzahl von Fügeteilen zugeordnet, das einen mit der Zuführöffnung der Einpreßeinrichtung in Verbindung stehenden Magazinkanal aufweist. Dies bietet eine völlig freie Beweglichkeit der Einpreßeinrichtung im Raum und erlaubt es beispielsweise, eine vorgegebene Anzahl von Muttern oder anderen Fügeteilen nacheinander in eine Schaltplatte einzupressen.

Die erfindungsgemäß vorgesehene Schnellschlußkupplung erlaubt es natürlich auch, die Einpreßeinrichtung zu Wartungs- und Reparaturzwecken rasch auszuwechseln.

Die Einpreßeinrichtung kann nicht nur zum Einstanzen von selbststanzenden Fügeteilen in Vollmaterial, sondern auch zum Einpressen von Fügeteilen in vorgebohrte Löcher verwendet werden. Außer Muttern lassen sich auch andere Fügeteile wie z.B. Bolzen und Nieten verarbeiten.

Weitere vorteilhafte Ausgestaltungen der Erfindung sind in den Unteransprüchen angegeben.

Anhand der Zeichnungen werden bevorzugte Ausführungsbeispiele der Erfindung näher erläutert. Es zeigen:
- Fig. 1: einen Längsschnitt durch eine nicht von Geltungsbereich der Ansprüche umfaßten Einpreßeinrichtung in Blickrichtung der Pfeile I-I in Fig. 2 zur Erläuterung einer möglichen Ausbildung einer Schnellschlußkupplung und des allgemeinen Aufbaus einer Fügeeinrichtung für Fügeteile;
- Fig. 2: eine Draufsicht auf die Einpreßeinrichtung der Fig. 1;
- Fig. 3: einen Längsschnitt durch ein erstes erfindungsgemäßes Ausführungsbeispiel einer Einpreßeinrichtung mit einem daran angeschlossenen Magazin in Blickrichtung der Pfeile III-III der Fig. 4;
- Fig. 4: eine Draufsicht auf die Einpreßeinrichtung der Fig. 3;
- Fig. 5: eine schematisch dargestellte Anwendungsmöglichkeit der Einpreßeinrichtung der Fig. 3;
- Fig. 6,7: eine Seitenansicht bzw. Draufsicht auf eine abgewandelte Ausführungsform einer Schnellschlußkupplung für die Einpreßeinrichtung der Fig. 3 in schematischer Darstellung;
- Fig. 8: eine teilweise geschnittene Seitenansicht einer anderen Ausführungsform einer Schnellschlußkupplung in schematisierter Darstellung;
- Fig. 9: eine Draufsicht auf eine Zuführvorrichtung mit einem Magazin für die Fügeteile;
- Fig. 10: einen Längsschnitt in Blickrichtung der Pfeile X-X in Fig. 9;
- Fig. 11: eine der Fig. 10 entsprechende Darstellung einer abgewandelten Ausführungsform des Magazins;
- Fig. 12: eine schematisierte Darstellung eines Werkzeug-Wechselsystems mit mehreren Einpreßeinrichtungen;
- Fig. 13: einen C-förmigen Bügel zum Anbringen der Einpreßeinrichtung der Fig. 1 an einem Roboterarm in schematisierter Darstellung;
- Fig. 14: eine Seitenansicht eines Roboters mit einer daran angebrachten Einpreßeinrichtung gemäß Fig. 3 in schematisierter Darstellung.

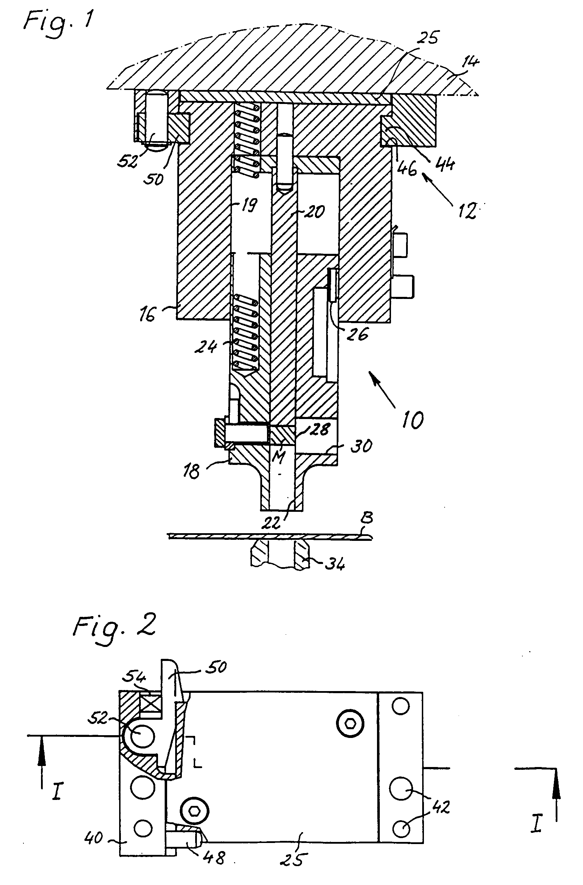

Die in den Fig. 1 und 2 dargestellte Einpreßeinrichtung 10 dient zum Einpressen einer selbststanzenden Mutter M in ein plattenförmiges Bauteil B. Zu diesem Zweck ist die Einpreßeinrichtung 10 durch eine Schnellschlußkupplung 12 an einem auf- und abbewegbaren oberen Pressenteil 14 angebracht, wie noch im einzelnen erläutert wird. Der Aufbau der Einpreßeinrichtung 10 wird nur insoweit beschrieben, als es zum Verständnis der vorliegenden Erfindung erforderlich ist.

Die Einpreßeinrichtung 10 besitzt ein oberen Gehäuseteil 16 und ein unteres Gehäuseteil 18, das in einer Ausnehmung 19 des oberen Gehäuseteils 16 verschiebbar geführt ist. Ein am oberen Gehäuseteil 16 befestigter Stempel 20 erstreckt sich in einen im unteren Gehäuseteil 18 gebildeten Kanal 22, so daß der Stempel 20 bei einer Relativverschiebung zwischen dem oberen und unteren Gehäuseteil die Mutter M durch den Kanal 22 treibt. Die beiden Gehäuseteile 16, 18 sind in Richtung voneinander weg durch Schraubenfedern 24 vorgespannt, die einerseits an einer die Oberseite des oberen Gehäuseteils 16 verschließenden Platte 15 und andererseits in Bohrungen des unteren Gehäuseteils 18 abgestützt sind. Die relative Verschiebung zwischen den beiden Gehäuseteilen 16 und 18 ist durch eine Hubbegrenzung 26 begrenzt.

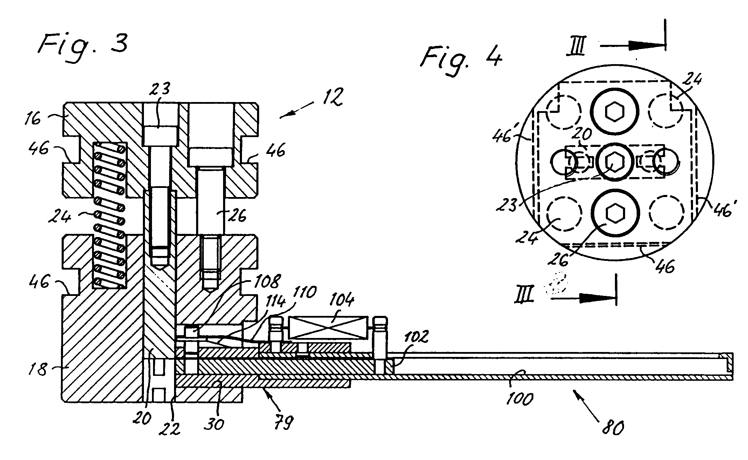

Die Muttern M werden dem Kanal 22 durch eine seitliche Zuführöffnung 28 zugeführt, die an eine Ausnehmung 30 angrenzt. An der Ausnehmung 30 kann ein Magazin oder ein zu einer Quelle führender Schlauch angeschlossen werden, wie dies in Verbindung mit den Fig. 3 und 9 bis 11 noch im einzelnen erläutert wird.

Zum Einstanzen der Mutter M in das an einer Matritze 34 abgestützte Bauteil B wird das Pressenoberteil 14 mit der daran befestigten Einpreßeinrichtung 12 nach unten bewegt, bis sich das untere Gehäuseteil 16 an das Bauteil B anlegt. Bei der weiteren Abwärtsbewegung des oberen Gehäuseteils 16 treibt der Stempel 20 die Mutter M von der Zuführstelle benachbart zur Zuführöffnung 28 durch den Kanal 22 aus dem offenen Ende des Kanals 22 heraus und preßt sie in das Bauteil B ein. Bei der Bewegung der Mutter M durch den Kanal 22 wird sie durch eine - nicht gezeigte - Haltevorrichtung in ihrer Position gehalten, die beispielsweise aus zwei am unteren Gehäuseteil 18 schwenkbar angelenkten, nockengesteuerten Halteklauen besteht, wie dies in der älteren Patentanmeldung P 42 11 276.1 beschrieben ist.

Wie gezeigt, ist die Einpreßeinrichtung 10 als integrale Baueinheit ausgebildet, die als Einheit transportiert, gespeichert und durch die Schnellschlußkupplung 12 an beliebigen Maschinenteilen angebracht werden kann. Bei dem in den Fig. 1, 2 dargestellten Ausführungsbeispiel besitzt die Schnellschlußkupplung 12 zwei Leisten 40, die durch Schrauben und Zentrierstifte 42 an dem Maschinenteil 14 befestigt sind. Die Leisten 40 sind mit seitlich vorstehenden, einander zugewandten Verriegelungsabschnitten 44 versehen, die von entsprechend dimensionierten Nuten 46 im oberen Gehäuseteil 16 gleitend aufgenommen werden.

Die Abschnitte 44 der Leisten 40 und die Nuten 46 bilden somit eine als Gleitführung ausgebildete Formschlußverbindung zwischen dem Maschinenteil 14 und der Einpreßeinrichtung 10. Eine Relativverschiebung in der Gleitführung wird einerseits durch einen Anschlag 48 und andererseits durch eine lösbare Sperre 50 begrenzt, die beide an einer der Leisten 40 vorgesehen sind. Die lösbare Sperre 50 besteht aus einem Sperrhebel, der an der Leiste 40 mittels eines Zapfens 52 drehbar gelagert ist und durch eine Feder 54 in seine Sperrstellung gedrückt wird, in der er mit einer Sperrnase an einer Seite des oberen Gehäuseteils 16 der Sperreinrichtung 10 anliegt.

Zum Ankoppeln der Einpreßeinrichtung 10 an dem Maschinenteil 14 wird das obere Gehäuseteil 16 mit seinen Nuten 46 seitlich zwischen die Leisten 40 eingeschoben, bis sich das obere Gehäuseteil 16 an den Anschlag 48 anliegt. Zu diesem Zeitpunkt wird die Sperre 50 selbsttätig von der Feder 54 in ihre Sperrstellung gedrückt, wodurch die Einpreßeinrichtung 10 an dem Maschinenteil 14 festgelegt ist. Zum Lösen braucht lediglich die Sperre 50 in ihre Öffnungsstellung geschwenkt werden, worauf die Einpreßeinrichtung 10 von den Leisten 40 abgezogen werden kann.

Eine abgewandelte Ausführungsform einer Einpreßeinrichtung 10 ist in den Fig. 3 und 4 dargestellt. Gleiche bzw. sich entsprechende Bauteile wurden mit denselben Bezugszeichen wie in den Fig. 1, 2 bezeichnet.

Das Ausführungsbeispiel der Fig. 3, 4 unterscheidet sich von dem der Fig. 1, 2 dadurch, daß das obere und untere Gehäuseteil 16, 18 vertikal zueinander beabstandet sind, der Stempel 20 die Führung zwischen den beiden Gehäuseteilen übernimmt und beide Gehäuseteile eine zylindrische Form und den gleichen Durchmesser haben.

Die Federn 24 sind unmittelbar in Bohrungen des oberen und unteren Gehäuseteils 16, 18 abgestützt. Der Stempel 20 wird durch eine Schraube 23 in einer lagegenauen Vertiefung des oberen Gehäuseteils 16 festgelegt, während als Hubbegrenzung 26 zwei in das untere Gehäuseteil 18 eingeschraubte, parallel zur Achse der Einpreßeinrichtung verlaufende Schrauben dienen.

Wie in Fig. 3 zu sehen ist, sind Nuten 46 der Schnellschlußkupplung 12 nicht nur im oberen Gehäuseteil 16, sondern auch im unteren Gehäuseteil 46 vorgesehen. Dies bietet die Möglichkeit, wahlweise das obere Gehäuseteil 16 oder das untere Gehäuseteil 18 an einem Maschinenteil zu befestigen.

Wie ferner in Fig. 4 zu sehen ist, sind zusätzlich zu den Nuten 46 in Umfangsrichtung um 90° versetzt zu diesen weitere Nuten 46' vorgesehen. Dies erlaubt es, die Einpreßeinrichtung in zwei um 90° gegenüber versetzten Stellungen an dem Maschinenteil anzubringen.

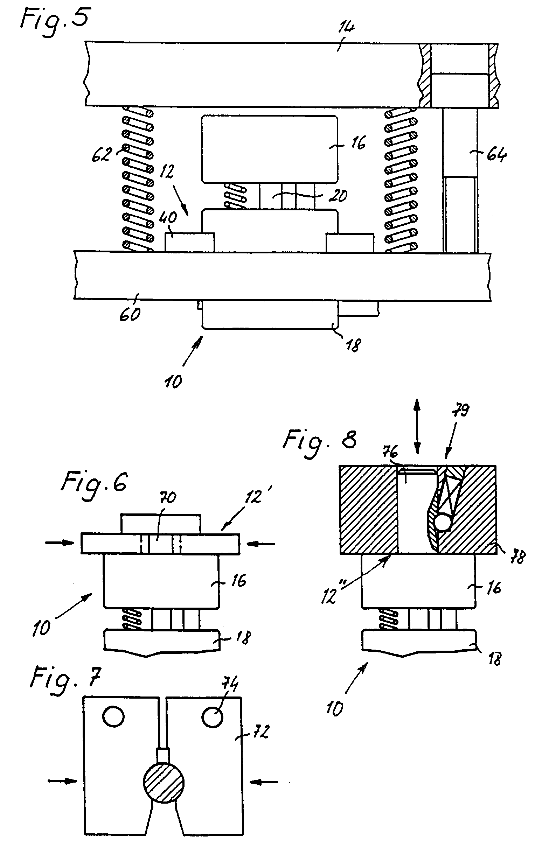

Fig. 5 zeigt einen Anwendungsfall, bei dem die Stanzeinrichtung 10 nicht über das obere Gehäuseteil 16, sondern über das untere Gehäuseteil 18 an einem Maschinenteil angebracht ist. Wie gezeigt, sind die Leisten 40 der Schnellschlußkupplung 12 an einer Zwischenplatte 60 vorgesehen, die über Federn 62 und Schrauben 64 an einem Maschinenteil 14 in Form eines oberen Pressenteils aufgehängt und geführt ist. Die Funktionsweise ist im Prinzip die gleiche wie bei dem Ausführungsbeispiel der Fig. 1, 2.

Bei der in den Fig. 1 bis 5 dargestellten Ausführungsform der Schnellschlußkupplung 12 erfolgt das Ein- und Ausrücken durch eine Relativbewegung zwischen Maschinenteil und Einpreßeinrichtung in einer Richtung, die senkrecht zur Achse der Einpreßeinrichtung 12 und somit senkrecht zur Richtung der Relativverschiebung zwischen dem oberen und unteren Gehäuseteil 16, 18 verläuft. Es versteht sich jedoch, daß es eine Vielzahl von anderen Ausführungsformen der Schnellschlußkupplung gibt. Bei der in Fig. 6, 7 nur schematisch dargestellten Schnellschlußkupplung 12' erfolgt die Ein- und Ausrückbewegung ebenfalls in einer Ebene, die auf der Achse der Einpreßeinrichtung 10 senkrecht steht. In diesem Fall ist jedoch an der Einpreßeinrichtung 10 als Kupplungsmittel eine Ringnut 70 vorgesehen, mit der zwei um Zapfen 74 drehbare Kupplungsbacken 72 in und außer Eingriff gerückt werden können.

Bei der in Fig. 8 schematisch dargestellten Schnellschlußkupplung 12'' erfolgt die Ein- und Ausrückbewegung in einer Richtung, die parallel zur Achse der Einpreßeinrichtung 10 verläuft. In diesem Fall ist das obere Gehäuseteil 16 mit einem zentralen Zapfen 76 versehen, der in eine Bohrung eines am Maschinenteil festgelegten Ringes 78 einschiebbar ist. Der Zapfen 76 wird im Ring 78 durch eine Rastvorrichtung 79 mit einer federvorgespannten Rastkugel festgelegt.

Wie bereits erwähnt, können die Muttern M bzw. andere Fügeteile zu dem Kanal 22 durch einen Schlauch zugeführt werden, der am unteren Gehäuseteil 18 fest oder lösbar angeschlossen ist. Eine andere Möglichkeit besteht darin, die Fügeteile aus einem Magazin 80 zur Aufnahme einer begrenzten Anzahl von Fügeteilen zuzuführen. Wie in den Fig. 3 und 9 bis 11 dargestellt ist, bildet das Magazin 80 einen Teil einer Zuführvorrichtung 79, die an dem unteren Gehäuseteil 18 der Einpreßeinrichtung 12 auswechselbar angebracht ist.

Die Zuführvorrichtung 79 kann, abgesehen von dem Magazin 80, den gleichen Aufbau wie die Zuführvorrichtung der deutschen Patentanmeldung P 42 11 278.8 haben. Sie besitzt ein Mundstück 82 mit einem durchgehenden Zuführkanal 83. Ein querschnittserweiterter Abschnitt des Zuführkanals 83 nimmt das Magazingehäuse 84 auf, so daß ein im Magazingehäuse 84 gebildeter Magazinkanal 100 glatt in den Zuführkanal 83 übergeht. Das Magazingehäuse 84 ist im Mundstück 82 durch eine Klemmplatte 86, Stifte 88 und Schrauben 90 festgelegt.

Das Mundstück 82 ist mit einem Ansatz 92 versehen, der in die Ausnehmung 30 des unteren Gehäuseteils 18 der Einpreßeinrichtung 10 einsetzbar ist (s. Fig. 3). Zum Ankoppeln des Mundstücks 82 am Gehäuseteil 18 sind zwei Hebel 94 vorgesehen, die um Stifte 96 schwenkbar sind und durch Federn 98 in ihre Sperrstellung vorgespannt werden, in der sie mit hakenförmigen Enden das Gehäuseteil 18 umgreifen.

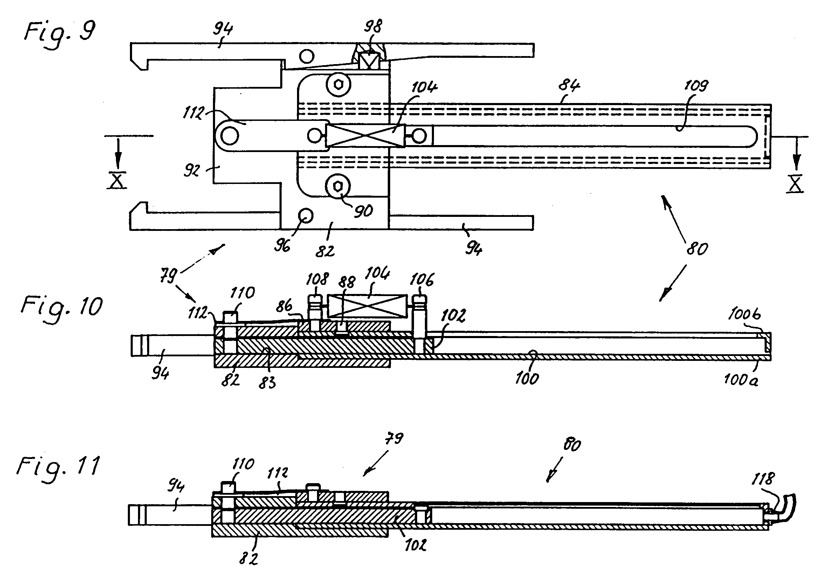

Im Magazinkanal 100 des von zwei Teilen 100a, 100b gebildeten Magazingehäuses 84 ist ein Schieber 102 längsverschiebbar gelagert. Bei dem Ausführungsbeispiel der Fig. 9, 10 wird der Schieber 102 durch eine Zugfeder 104 in eine Richtung vorgespannt, in der er die im Magazinkanal 100 liegenden Muttern in Richtung auf das Auslaßende des Ansatzes 92 des Mundstücks 82 treibt. Die Zugfeder 104 ist einerseits an einem am Mundstück 82 festgelegten Stift 108 und andererseits an einem am Schieber 102 festgelegten Stift 106 aufgehängt, welcher sich durch einen längsverlaufenden Druchbruch 109 des oberen Magazinteils 100b erstreckt.

Um im abgekoppelten Zustand der Zuführvorrichtung 79 ein Herausfallen der Muttern aus dem Mundstückkanal 100 und somit aus dem Magazin 80 zu verhindern, ist eine Sperre in Form eines Bolzens 110 vorgesehen, der durch eine an der Zuführvorrichtung festgelegte Blattfeder 112 in eine den Mundstückkanal 82 sperrende Stellung vorgespannt ist und beim Ankoppeln selbsttätig in eine Freigabestellung gedrückt wird.

Das Magazin 80 wird im abgekoppelten Zustand mit einer vorgegebenen Anzahl von Muttern (beispielsweise zehn Muttern) gefüllt, so daß sich der Schieber 102 aus seiner in Fig. 10 linken Endstellung in seine rechte Endstellung bewegt, in der die Muttern durch den Bolzen 110 am Herausfallen gehindert werden. Beim Ankoppeln der Zuführvorrichtung 79 an der Einpreßrichtung 10 wird der Bolzen selbsttätig - durch eine Schrägfläche 114 - in seine freigebende Stellung bewegt (Fig. 3). Der durch die Feder 104 vorgespannte Schieber 102 kann dann die Muttern nacheinander dem Kanal 22 im unteren Gehäuseteil 18 zuführen.

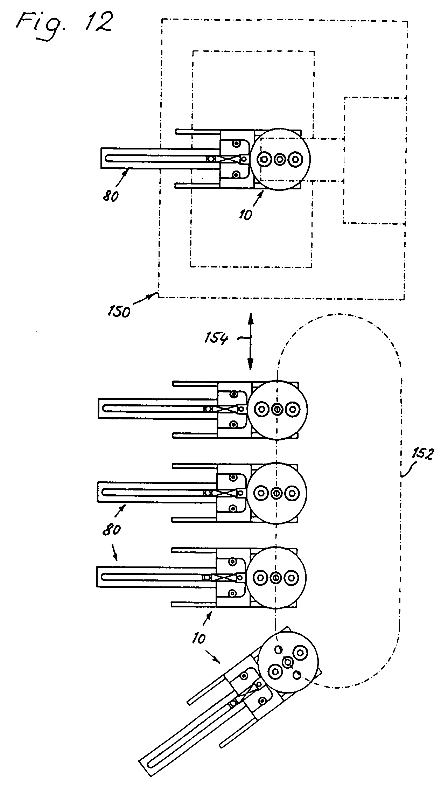

Während bei dem Ausführungsbeispiel der Fig. 9, 10 der Schieber 102 durch Federkraft verschoben wird, wird bei dem Ausführungsbeispiel der Fig. 11 die Vorspannkraft durch Druckluft erzeugt. Zu diesem Zweck ist am hinteren Ende des strömungsmitteldicht ausgebildeten Magazinkanals 100 ein Druckluftanschluß 118 vorgesehen, der über eine Schlauchverbindung zu einer Druckluftquelle führt. Die Schlauchverbindung kann zu einer am Mundstück 82 vorgesehenen Druckluftkupplung (nicht gezeigt) geführt sein, die beim Ankoppeln der Zuführvorrichtung an der Einpreßeinrichtung selbsttätig eine Verbindung zu der Druckluftquelle herstellt.

Bei entsprechender Konstruktion des Magazins könnte der Schieber 102 auch weggelassen werden, so daß dann die Fügeteile unmittelbar mit der Druckluft beaufschlagt werden. In diesem Falle könnte eine Befüllungsöffnung am hinteren Ende des Magazins vorgesehen werden.

Da die in den Figuren dargestellte Einpreßeinrichtung 10 eine integrale Baueinheit darstellt, die durch die Schnellschlußkupplung 12 rasch und in einfacher Weise an beliebigen Maschinenteilen angebracht werden kann, stehen der Einpreßeinrichtung 10 mannigfache Anwendungsmöglichkeiten offen. So zeigt die Fig. 12 in schematischer Weise ein Werkzeugwechselsystem einer strichpunktiert angedeuteten Werkzeugmaschine 150, bei der mehrere Einpreßeinrichtungen 10 mit daran angebrachten Magazinen 80 als auswechselbare Werkzeuge vorgesehen sind. Die Einpreßeinrichtungen 10 werden zusammen mit anderen Werkzeugen (nicht gezeigt) in einem Speicher 152 gespeichert und werden je nach Bedarf durch eine mittels eines Doppelpfeils 154 angedeuteten Förder- und Wechseleinrichtung zu der Werkzeugmaschine 150 transportiert, an der sie mittels einer entsprechend ausgebildeten Schnellschlußkupplung eingespannt werden können.

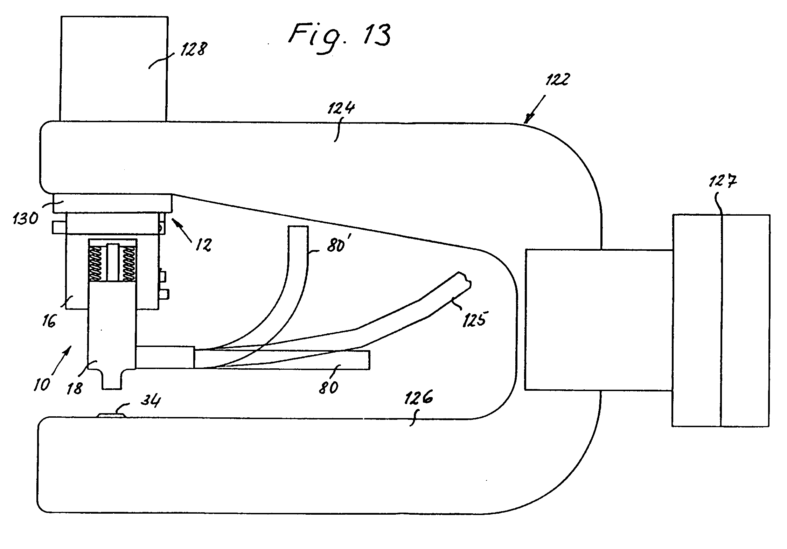

Eine andere Anwendungsmöglichkeit zeigt Fig. 13. Ein C-förmiger Bügel 122 mit einem oberen Schenkel 124 und einem unteren Schenkel 126 ist über eine Anschlußverbindung 127 an einem Roboterarm (nicht gezeigt) angebracht. Der obere Schenkel 124 des Bügels 122 trägt eine Betätigungseinrichtung in Form einer Kolben-Zylinder-Einheit 128 mit einem hydraulischen Kolben 130. An dem hydraulischen Kolben 130 ist durch die Schnellschlußkupplung 12 eine Einpreßeinrichtung 10 gemäß den Fig. 1, 2 auswechselbar angebracht.

Das untere Gehäuseteil 18 trägt ein Magazin 80, das entsprechend den Fig. 9 bis 11 am unteren Gehäuseteil 18 auswechselbar angebracht ist. Das Magazin 80 kann jedoch an dem unteren Gehäuseteil 18 auch fest angebracht werden, falls am unteren Gehäuseteil 18 oder an anderer Stelle eine Möglichkeit zum Befüllen des Magazins 80 vorgesehen ist. Wie gestrichelt angedeutet, könnte das geradlinige Magazin 80 durch ein gekrümmtes Magazin 80' ersetzt werden, bei dem die Fügeteile durch Schwerkraft zugeführt werden. Statt eines Magazins 80 bzw. 80' könnte jedoch auch ein flexibler Schlauch 125 vorgesehen werden, der mit einem Sortierer oder einer anderen Quelle in Verbindung steht und so dimensioniert ist, daß er die Bewegungen des Roboterarms und der daran befestigten Einpreßeinrichtung 10 nicht behindert.

Der untere Schenkel 126 des C-förmigen Bügels 122 besitzt eine Gegenfläche in Form einer Matritze 34 zum Abstützen eines plattenförmigen Bauteils (nicht gezeigt), in das die Fügeteile eingepreßt werden.

Die in Fig. 13 gezeigte Konstruktion erlaubt es, die Einpreßeinrichtung 10 mit Hilfe des (nicht gezeigten) Roboterarms an jede für den Roboterarm erreichbare Arbeitsstelle zu transportieren, um dort einen Einpreßvorgang durchzuführen.

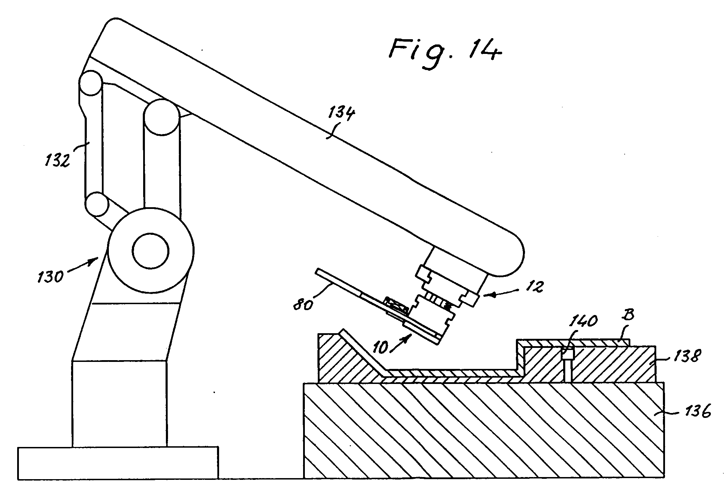

Gemäß Fig. 14 ist die Einpreßeinrichtung 10 durch die Schnellschlußkupplung 12 unmittelbar an dem Arm 134 eines schematisch dargestellten und mit einem Gestänge 132 versehenen Roboters 130 befestigt. Ebenfalls schematisch angedeutet ist eine stationäre Unterlage 136 mit einer Form 138, die ein entsprechend verformtes plattenförmiges Bauteil B enthält. In das Bauteil B ist an der Stelle 140 ein Fügeteil (nicht gezeigt) einzupressen. Zu diesem Zweck bewegt der Roboter 130 die Einpreßeinrichtung 10 in eine Position, in der der Fügeteil-Kanal der Einpreßeinrichtung 12 präzise über der Arbeitsstellung 140 liegt. Zum Einpressen des Fügeteils in das Bauteil B bewegt dann der Roboter 130 seinen Arm 134 vertikal nach unten, so daß die Einpreßbewegung des Stempels 20 vom Roboter selbst aufgebracht wird.

Handelt es sich hierbei um selbststanzende Fügeteile, so muß natürlich die Einstanzkraft von dem entsprechend konstruierten Roboter aufgebracht werden. Eine wesentlich geringere Einpreßkraft ist erforderlich, wenn die Einpreßeinrichtung 10 die Fügeteile in vorgefertigte Löcher des Bauteils B einpreßt.

## Patentansprüche

1. Einpreßeinrichtung (10) zum Einpressen von Fügeteilen wie z.B. Muttern (M) in plattenförmige Bauteile (B), mit einem oberen und unteren Gehäuseteil (16, 18), die relativ zueinander begrenzt verschiebbar und durch Federkraft (24) in Richtung voneinander weg vorgespannt sind, wobei das untere Gehäuseteil einen Fügeteil-Kanal (22) aufweist, dem jeweils ein Fügeteil (M) durch eine seitliche Zuführöffnung (28) zuführbar ist, und einem Stempel (20), der am oberen Gehäuseteil (16) festgelegt ist und sich in den Fügeteil-Kanal erstreckt, um bei einer Relativverschiebung zwischen dem oberen und unteren Gehäuseteil (16, 18) das im Kanal (22) befindliche Fügeteil (M) von einer Ausgangsstelle benachbart zur Zuführöffnung (28) zu einer Arbeitsstelle benachbart zum offenen Ende des Kanals (22) zu verschieben und in das plattenförmige Bauteil (B) einzupressen, dadurch gekennzeichnet, daß die Einpreßeinrichtung (10) als integrale Baueinheit ausgebildet ist, die durch eine Schnellschlußkupplung (12) an einem Maschinenteil (14) anbringbar ist, daß Kupplungsmittel (46) der Schnellschlußkupplung (12) sowohl am oberen wie auch am unteren Gehäuseteil (16, 18) vorgesehen sind, so daß wahlweise das obere oder untere Gehäuseteil am Maschinenteil anbringbar ist (Fig. 3), und daß das untere Gehäuseteil (18) durch die Schnellschlußkupplung (12) an einer Zwischenplatte (60) anbringbar ist, die an dem als Pressenoberteil ausgebildeten Maschinenteil (14) federnd aufgehängt ist.

2. Einpreßeinrichtung nach Anspruch 1, dadurch gekennzeichnet, daß die Schnellschlußkupplung (12; 12', 12'') durch eine Relativbewegung zwischen dem Maschinenteil und der Einpreßeinrichtung (10) ein- und ausrückbar ist, die in einer Ebene parallel oder senkrecht zur Relativverschiebung des oberen und unteren Gehäuseteils (16, 18) erfolgt.

3. Einpreßeinrichtung nach Anspruch 2, dadurch gekennzeichnet, daß die Schnellschlußkupplung (12) aus einer als Gleitführung (46, 50) ausgebildeten Formschlußverbindung zwischen dem Maschinenteil (14) und der Einpreßeinrichtung (10) besteht, wobei eine Relativbewegung in der Gleitführung (46, 50) einerseits durch einen Anschlag (48) und andererseits durch eine lösbare Sperre (50) begrenzt ist.

4. Einpreßeinrichtung nach einem der vorhergehenden Ansprüche, dadurch gekennzeichnet, daß Kupplungsmittel (46) der Schnellschlußkupplung (12) an um 90° gegeneinander versetzten Seiten der Einpreßeinrichtung (10) vorgesehen sind, so daß die Einpreßeinrichtung (10) wahlweise in der einen oder anderen von zwei um 90° gegeneinander versetzten Stellungen am Maschinenteil anbringbar ist.

5. Einpreßeinrichtung nach einem der vorhergehenden Ansprüche, dadurch gekennzeichnet, daß das obere und untere Gehäuseteil (16, 18) vertikal zueinander beabstandet sind und der mittig zu beiden Gehäuseteilen (16, 18) angeordnete Stempel (20) die Führung zwischen den beiden Gehäuseteilen (16, 18) vornimmt.

6. Einpreßeinrichtung nach Anspruch 5, dadurch gekennzeichnet, daß beide Gehäuseteile (16, 18) eine zylindrische Form und den gleichen Durchmesser haben.

7. Einpreßeinrichtung nach einem der vorhergehenden Ansprüche, dadurch gekennzeichnet, daß sie als auswechselbares Werkzeug eines Werkzeugsystems (Fig. 12) einer Werkzeugmaschine (15) ausgebildet ist.

8. Einpreßeinrichtung nach Anspruch 9, gekennzeichnet durch die Kombination mit mehreren gleichartigen Einpreßeinrichtungen (10) in einem der Werkzeugmaschine (150) zugeordneten Speicher (152) und mit einer sie zu der Werkzeugmaschine transportierenden Förder- und Wechseleinrichtung (154).

9. Einpreßeinrichtung nach Anspruch 8, dadurch gekennzeichnet, daß die Einpreßeinrichtungen (10) zusammen mit anderen Werkzeugen im Speicher (152) gespeichert sind.

10. Einpreßeinrichtung nach einem der vorhergehenden Ansprüche, dadurch gekennzeichnet, daß sie durch die Schnellschlußkupplung (12) unmittelbar an einem präzise lagesteuerbaren Roboterarm (134) anbringbar ist, so daß die zum Einpressen des Fügeteils (M) erforderliche Relativverschiebung zwischen dem oberen und unteren Gehäuseteil (16, 18) durch eine entsprechende Bewegung des Roboterarms (134) erzeugt wird.

11. Einpreßeinrichtung nach einem der Ansprüche 1 bis 9, dadurch gekennzeichnet, daß das Maschinenteil ein an einem Roboterarm (127) angebrachter C-förmiger Bügel (122) ist, dessen einer Schenkel (124) mittels der Schnellschlußkupplung (12) die Einpreßeinrichtung (10) trägt und dessen gegenüberliegender Schenkel (126) eine das plattenförmige Bauteil abstützende Gegenfläche (34) aufweist.

12. Einpreßeinrichtung nach Anspruch 11, dadurch gekennzeichnet, daß sie mittels der Schnellschlußkupplung (12) an dem Kolben (130) einer Kolben-Zylinder-Einheit (128) anbringbar ist, die an dem einen Schenkel (124) des C-förmigen Bügels (122) befestigt ist.

13. Einpreßeinrichtung nach einem der vorhergehenden Ansprüche, dadurch gekennzeichnet, daß an der seitlichen Zuführöffnung (28) des unteren Gehäuseteils (18) ein Schlauch (125) angeschlossen ist, der zum Zuführen der Fügeteile mit einer Quelle für die Fügeteile in Verbindung steht.

14. Einpreßeinrichtung nach einem der Ansprüche 1 bis 12, dadurch gekennzeichnet, daß an der seitlichen Zuführöffnung (28) des unteren Gehäuses (18) ein Magazin (80) zur Aufnahme einer begrenzten Anzahl von Fügeteilen anschließbar ist, das einen mit der Zuführöffnung (28) in Verbindung stehenden Magazinkanal (100) aufweist.

15. Einpreßeinrichtung nach Anspruch 12, dadurch gekennzeichnet, daß das Magazin (80) eine Befüllungsöffnung an seinem hinteren Ende aufweist.

16. Einpreßeinrichtung nach Anspruch 13, 14 oder 15, dadurch gekennzeichnet, daß der Schlauch (125) bzw. das Magazin (80) am unteren Gehäuseteil (18) fest angebracht ist.

17. Einpreßeinrichtung nach Anspruch 14, 14 oder 15, dadurch gekennzeichnet, daß der Schlauch (125) bzw. das Magazin (80) an einem Mundstück (82) angebracht ist, das am unteren Gehäuseteil (18) auswechselbar anbringbar ist.

18. Einpreßeinrichtung nach einem der Ansprüche 13 bis 17, dadurch gekennzeichnet, daß die Fügeteile im Magazin-Kanal (100) des Magazins (80; 80') durch Federkraft, Strömungsmitteldruck oder Schwerkraft verschiebbar sind.

## Claims

1. Press-in device (10) for the pressing of fastener parts, such as for example nuts (M), into plate-like components (B) comprising an upper housing part (16) and a lower housing part (18) which are restrictedly displaceable relative to one another and are biased in the direction away from one another by a spring force (24), wherein the lower housing part has a fastener part channel (22) to which in each case one fastener part (M) can be supplied through a lateral supply opening (28), and a plunger (20) which is secured to the upper housing part (16) and extends in the fastener part channel in order, on a relative displacement between the upper and lower parts (16, 18) of the housing, to displace the fastener part (M) located in the channel (22) from a starting position adjacent to the supply opening (28) to a working position adjacent to the open end of the channel (22) and to press it into the plate-like component (B), characterised in that the press-in device (10) is formed as an integral module which can be connected by a quick-closure coupling (12) to a machine part (14), in that the coupling means (46) of the quick-closure coupling (12) are provided both at the upper housing part (16) and also at the lower housing part (18) so that the upper or lower housing part can be selectively attached to the machine part (Fig. 3), in that the lower housing part (18) can be attached by the quick-closure coupling (12) to an intermediate plate (60) which is resiliently suspended on the machine part (14) which is formed as the upper part of a press.

2. Press-in device in accordance with claim 1, characterised in that the quick-closure coupling (12; 12'; 12'') can be engaged and disengaged by a relative movement between the machine part and the press-in device (10) which takes place in a plane parallel or perpendicular to the relative displacement of the upper housing part (16) and the lower housing part (18).

3. Press-in device in accordance with claim 2, characterised in that the quick-closure coupling (12) consists of a form-fitted connection between the machine part (14) and the press-in device (10) which is formed as a sliding guide (46, 50), with a relative movement in the sliding guide (46, 50) being restricted at the one end by an abutment (48) and at the other end by a releasable lock (50).

4. Press-in device in accordance with one of the preceding claims, characterised in that coupling means (46) of the quick-closure coupling (12) are provided at sides of the press-in device (10) which are displaced relative to one another by 90° so that the press-in device (10) can be selectively attached to the machine part at one or other of two positions displaced by 90° relative to one another.

5. Press-in device in accordance with one of the preceding claims, characterised in that the upper housing part (16) and the lower housing part (18) are vertically spaced apart from one another and the plunger which is arranged centrally to the two housing parts (16, 18) effects the guidance between the two housing parts (16, 18).

6. Press-in means in accordance with claim 5, characterised in that the two housing parts (16, 18) have a cylindrical shape and the same diameter.

7. Press-in device in accordance with one of the preceding claims, characterised in that it is formed as an interchangeable tool of a machine tool (15 ).

8. Press-in device in accordance with claim 9, characterised by the combination with several like press-in devices (10) in a store (152) associated with the machine tool (150) and with a conveying and changing device (154) which transports them to the machine tool.

9. Press-in device in accordance with claim 8, characterised in that the press-in devices (10) are stored together with other tools in the store (152).

10. Press-in device in accordance with one of the preceding claims, characterised in that it can be mounted by the quick closure coupling (12) directly on a precisely position controlled robot arm (134) so that the relative displacement between the upper housing part (16) and the lower housing part (18) necessary for the pressing in of the fastener part (M) is generated by a corresponding movement of the robot arm (134).

11. Press-in device in accordance with one of the claims 1 to 9, characterised in that the machine part is a C-shaped yoke (122) mounted on a robot arm (127) with one limb (124) of the yoke carrying the press-in device (10) by means of the quick-closure coupling (12) and with the oppositely disposed limb (126) having a counter-surface (34) which supports the plate-like component.

12. Press-in device in accordance with claim 11, characterised in that it can be attached by means of the quick-closure coupling (12) to the piston (130) of a piston-in-cylinder-unit (128) which is secured to the one limb (124) of the C-shaped yoke (122).

13. Press-in device in accordance with one of the preceding claims, characterised in that a hose (125) which communicates for the supply of the fastener parts to a source for the fastener parts is attached to the lateral supply opening (28) of the lower housing part (18).

14. Press-in device in accordance with one of the claims 1 to 12, characterised in that a magazine (80) for receiving a restricted number of fastener parts can be connected to the lateral supply opening (28) of the lower housing (18) and has a magazine channel (100) which stands in communication with the supply opening (28).

15. Press-in device in accordance with claim 12, characterised in that the magazine (80) has a filling opening at its rear end.

16. Press-in device in accordance with claim 13, 14 or 15, characterised in that the hose (125) or the magazine (80) is fixedly attached to the lower housing part (18).

17. Press-in device in accordance with claim 13, 14 or 15, characterised in that the hose (125) or the magazine (80) is attached to a mouth-piece (82) which is interchangeably mountable at the lower housing part (18).

18. Press-in device in accordance with one of the claims 13 to 17, characterised in that the fastener parts are displaceable in the magazine channel (100) of the magazine (80; 80') by spring-force, by fluid pressure or by gravity.

## Revendications

1. Dispositif d'encastrement (10) destiné à enfoncer des pièces d'assemblage, comme par exemple des écrous (M), dans des composants (B) en forme de plaque, comprenant une partie de boîtier supérieure et une partie de boîtier inférieure (16, 18), lesquelles sont mobiles de façon limitée l'une par rapport à l'autre, et sont précontraintes en éloignement l'une de l'autre sous la force d'un ressort (24), la partie de boîtier inférieure comprenant un canal (22) pour les pièces d'assemblage, auquel on peut amener respectivement une pièce d'assemblage (M) via une ouverture d'amenée latérale (28), et un poussoir (20), qui est fixé sur la partie de boîtier supérieure (16) et s'étend jusque dans le canal pour pièces d'assemblage, afin de déplacer la pièce d'assemblage (M) qui se trouve dans le canal (22), par un déplacement relatif entre la partie de boîtier inférieure et la partie de boîtier supérieure (16, 18), depuis une position de départ voisine de l'ouverture d'amenée (28) jusqu'à une position de travail voisine de l'extrémité ouverte du canal (22), et afin d'enfoncer ladite pièce dans le composant (B) en forme de plaque, caractérisé en ce que le dispositif d'encastrement (10) est réalisé sous forme d'une unité structurelle intégrale, laquelle peut être montée au moyen d'un accouplement à fermeture rapide (12) sur une partie de machine (14), en ce que des moyens d'accouplement (46) de l'accouplement à fermeture rapide (12) sont prévus tant sur la partie de boîtier supérieure que sur la partie de boîtier inférieure (16, 18), de sorte que l'on peut monter au choix la partie de boîtier supérieure ou la partie de boîtier inférieure sur la partie de machine (figure 3), en ce que la partie de boîtier inférieure (12) est susceptible d'être montée au moyen de l'accouplement à fermeture rapide (12) sur une plaque intermédiaire (60), laquelle est suspendue de façon élastique sur la partie de machine (14) réalisée sous forme d'une partie supérieure de presse.

2. Dispositif d'encastrement selon la revendication 1, caractérisé en ce que l'accouplement à fermeture rapide (12; 12', 12'') peut être rétracté et déployé par un déplacement relatif entre la partie de machine et le dispositif d'encastrement (10), ce déplacement ayant lieu dans un plan parallèle ou perpendiculaire au déplacement relatif de la partie de boîtier supérieure et de la partie de boîtier inférieure (16, 18).

3. Dispositif d'encastrement selon la revendication 2, caractérisé en ce que l'accouplement à fermeture rapide (12) est constitué par une liaison à coopération de formes, réalisée sous forme d'un guidage coulissant (46, 50) entre la partie de machine (14) et le dispositif d'encastrement (10), et dans lequel un déplacement relatif dans le guidage coulissant (46, 50) est limité d'une part par une butée (48) et d'autre part par un verrou susceptible d'être libéré (50).

4. Dispositif d'encastrement selon l'une des revendications précédentes, caractérisé en ce que des moyens d'accouplement (46) de l'accouplement à fermeture rapide (12) sont prévus sur des côtés décalés de 90° l'un par rapport à l'autre du dispositif d'encastrement (10), de sorte que le dispositif d'encastrement (10) peut être monté au choix sur la partie de machine dans l'une ou l'autre de deux positions décalées de 90° l'une par rapport à l'autre.

5. Dispositif d'encastrement selon l'une des revendications précédentes, caractérisé en ce que la partie de boîtier supérieure et la partie de boîtier inférieure (16, 18) sont à distance l'une de l'autre dans le sens vertical, et en ce que le poussoir (20) agencé au milieu par rapport aux deux parties de boîtier (16, 18) assure le guidage entre les deux parties de boîtier (16, 18).

6. Dispositif d'encastrement selon la revendication 5, caractérisé en ce que les deux parties de boîtier (16, 18) ont une forme cylindrique et le même diamètre.

7. Dispositif d'encastrement selon l'une des revendications précédentes, caractérisé en ce qu'il est réalisé sous forme d'un outil interchangeable d'un système d'outils (figure 12) d'une machine-outil (15).

8. Dispositif d'encastrement selon la revendication 9, caractérisé par la combinaison avec plusieurs dispositifs d'encastrement (10) de même type dans un stockage (152) associé à une machine-outil (150), et avec un dispositif d'amenée et d'échange (154) qui les transporte à la machine-outil.

9. Dispositif d'encastrement selon la revendication 8, caractérisé en ce que les dispositifs d'encastrement (10) sont stockés ensemble avec d'autres outils dans le stockage (152).

10. Dispositif d'encastrement selon l'une des revendications précédentes, caractérisé en ce qu'il est susceptible d'être monté au moyen de l'accouplement à fermeture rapide (12) directement sur un bras de robot (134) dont la position peut être commandée avec précision, de sorte que le déplacement relatif nécessaire entre la partie de boîtier supérieure et la partie de boîtier inférieure (16, 18) pour enfoncer la pièce d'assemblage (M) est produit par un déplacement correspondant du bras de robot (134).

11. Dispositif d'encastrement selon l'une des revendications 1 à 9, caractérisé en ce que la partie de machine est un étrier en forme de C (122) monté sur un bras de robot (127), dont l'un des côtés (124) porte le dispositif d'encastrement (10) au moyen de l'accouplement à fermeture rapide (12), et dont le côté opposé (126) présente une contre-surface (34) qui supporte le composant en forme de plaque.

12. Dispositif d'encastrement selon la revendication 11, caractérisé en ce qu'il est susceptible d'être monté au moyen de l'accouplement à fermeture rapide (12) sur le piston (130) d'une unité à piston-et-cylindre (128), laquelle est fixée sur l'un des côtés (124) de l'étrier en forme de C (122).

13. Dispositif d'encastrement selon l'une des revendications précédentes, caractérisé en ce qu'un tuyau (125) est raccordé à l'ouverture d'amenée latérale (28) de la partie intérieure de boîtier (18), ledit tuyau étant en liaison avec une source de pièces d'assemblage pour amener des pièces d'assemblage.

14. Dispositif d'encastrement selon l'une des revendications 1 à 12, caractérisé en ce qu'un magasin (80) destiné à recevoir un nombre limité de pièces d'assemblage est susceptible d'être raccordé à l'ouverture d'amenée latérale (28) du boîtier inférieur (18), ledit magasin présentant un canal (100) en liaison avec l'ouverture d'amenée (28).

15. Dispositif d'encastrement selon la revendication 12, caractérisé en ce que le magasin (80) présente à son extrémité arrière une ouverture de remplissage.

16. Dispositif d'encastrement selon l'une des revendications 13, 14 ou 15, caractérisé en ce que le tuyau (125) ou le magasin (80) est monté de façon fixe sur la partie de boîtier inférieure (18).

17. Dispositif d'encastrement selon l'une des revendications 13, 14 ou 15, caractérisé en ce que le tuyau (125) ou le magasin (80) est monté sur une pièce d'embouchure (84), laquelle peut être montée de façon interchangeable sur la partie inférieure de boîtier (18).

18. Dispositif d'encastrement selon l'une des revendications 13 à 17, caractérisé en ce que les pièces d'assemblage peuvent être déplacées dans le canal (100) du magasin (80 ; 80') par la force d'un ressort, la force de gravité, ou la pression d'un fluide.
